# EUROPÄISCHE PATENTANMELDUNG

(11) **EP 0 834 714 A2**
(43) Veröffentlichungstag der Anmeldung: **08.04.1998**
(21) Anmeldenummer: 97890198.1
(22) Anmeldetag: 06.10.1997
(51) Int. Cl.: F28D 1/053, F28F 1/14

(54) **Heizkörper**

(30) Priorität: 04.10.1996 AT 1762/96
(71) Anmelder: Lackner, Franz, 8970 Schladming (AT); Werner, Franz, Stefan, 1090 Wien (AT)
(72) Erfinder: Lackner, Franz, 8970 Schladming (AT); Werner, Franz, Stefan, 1090 Wien (AT)
(74) Vertreter: Häupl, Armin, Dipl.-Ing.

(57) **Zusammenfassung**

Die Erfindung betrifft einen Heizkörper (1) mit zwei voneinander beabstandete Sammelrohren (2) zum Anschluß an ein Heizsystem, die durch eine Vielzahl untereinander beabstandeter Trägerrohre (4) miteinander kommunizierend verbunden sind, wobei die Trägerrohre (4) aus gut wärmeleitfähigem Material bestehen und mit Platten (3) aus gut wärmeleitfähigem Material, insbesondere Metall, vorzugsweise Kupfer, verbunden sind, und die Platten (3) die zwischen den Sammelrohren (2) aufgespannte geometrische Fläche überdecken. Ein solcher Heizkörper kann vorteilhaft in Fußboden- und Wandheizsystemen verwendet werden.

## Beschreibung

Da herkömmliche Heizsysteme wie Radiatorenheizungen und Luftklimaanlagen aufgrund der bei ihnen vorherrschenden Wärmeübertragung durch Wärmekonvektion beträchtliche Staubzirkulationen im beheizten Raum verursachen, die der Auslöser für verschiedene Allergien und chronische Erkrankungen der Atemwege sein können, wurde in der Vergangenheit intensiv nach anderen Heizsystemen geforscht, die die oben genannten Nachteile nicht aufweisen. Diese Forschungstätigkeit führte zur Entwicklung von Fußboden- und Wandheizungen, bei denen die Wärme vorwiegend als Wärmestrahlung abgegeben wird, auch wenn diese Heizungen im Niedertemperaturbereich betrieben werden. Es hat sich gezeigt, daß diese Heizungen vom Menschen als sehr angenehm empfunden werden und gegenüber herkömmlichen Radiatorenheizungen eine Absenkung der Raumlufttemperatur um 2-3°C bei gleichem Wärmeempfinden der im Raum anwesenden Personen ermöglichen. Dadurch kann der Energieverbrauch um bis zu 20% gesenkt werden. Diese Fußboden- und Wandheizungen können in Verbindung mit konventionellen Öl-, Gas- oder Festbrennstoffheizkesseln betrieben werden, eignen sich aber aufgrund der niedrigen erforderlichen Heiztemperaturen auch hervorragend zum Einsatz in Verbindung mit Sonnenkollektoren oder Wärmepumpen.

Das Prinzip der eingangs beschriebenen Fußboden- und Wandheizungen beruht darauf, daß eine bestimmte Fläche des Bodens oder einer Wand möglichs gleichmäßig erwärmt und in der Folge die Wärme von dieser Fläche direkt auf den Menschen abgestrahlt wird. Dies erfolgt nach dem Stand der Technik dadurch, daß Heizrohrregister oder Heizrohrschlangen im Boden oder in der Wand verlegt werden, die dann durch übliche Verfahren wie Verputzen oder Verfliesen abgedeckt werden. Damit sich der für die Heizung vorgesehene Bereich des Bodens oder einer Wand auch gleichmäßig erwärmt, ist es notwendig, die einzelnen Heizrohre oder -rohrsegmente in möglichst geringem Abstand voneinander zu verlegen. Dies erfordert natürlich einen aufwendigen Verlegevorgang sowie eine große Gesamtlänge der verlegten Rohre. Durch die enge Verlegung tritt insbesondere bei Wandheizungen das Problem auf, daß nur an wenigen Stellen Nägel oder Schrauben in die Wand getrieben werden können, ohne dabei zu riskieren, daß ein Rohr beschädigt wird.

Die vorliegende Erfindung bietet eine Lösungsmöglichkeit für die vorstehenden Probleme an.

Der erfindungsgemäße Heizkörper weist zwei voneinander beabstandete Sammelrohre zum Anschluß an ein Heizsystem auf, die durch eine Vielzahl untereinander beabstandeter Trägerrohre miteinander kommunizierend verbunden sind, wobei die Trägerrohre aus gut wärmeleitfähigem Material bestehen und mit Platten aus gut wärmeleitfähigem Material, insbesondere Metall, vorzugsweise Kupfer, verbunden sind, und die Platten die zwischen den Sammelrohren aufgespannte geometrische Fläche überdecken.

Dadurch entsteht ein Flächenheizkörper, der Wärme gleichmäßig über seine gesamte Fläche abstrahlt. Dieser Heizkörper kann an alle Heizsysteme angeschlossen werden, bei denen ein flüssiges Wärmeträgermedium in einem Leitungssystem zirkuliert. Eines der Sammelrohre wird an den Heizungsvorlauf, das andere an den Rücklauf angeschlossen. Besonders geeignet ist der erfindungsgemäße Heizkörper auch für Heizsysteme mit Sonnenkollektoren oder Wärmepumpen, da er auch im Niedertemperaturbereich (25-55°C) arbeiten kann. Die erhitzte Wärmeträgerflüssigkeit tritt in das als Vorlaufrohr wirkende Sammelrohr des Heizkörpers ein und strömt von diesem Sammelrohr durch die Wärmeträgerrohre in das zweite, als Rücklauf wirkende Sammelrohr, wo es den Heizkörper abgekühlt wieder verläßt. Während seines Wegs durch den Heizkörper gibt das Wärmeträgermedium vor allem an die Trägerrohre Wärme ab, die die Wärme wiederum an die mit ihnen verbundenen Platten weiterleiten, von wo sie gleichmäßig abgestrahlt wird. Die Steuerung der Wärmeabgabe kann entweder zentral über die Heizungsanlage durch Regulierung der Temperatur des Wärmeträgermediums bzw. der Durchflußmenge oder direkt am Heizkörper mittels Thermostat, Handregelung, Thermikmotoren oder dergl. erfolgen. Neben dem Einsatz in der Raumbeheizung kann der erfindungsgemäße Heizkörper beispielsweise auch zur Erwärmung von Schwimmbecken, Saunakammern oder dergleichen dienen. Zusätzlich kann er zur Abkühlung von Räumen verwendet werden, wenn er mit kaltem Wasser etc. durchströmt wird.

Eine bevorzugte Ausführungsform des erfindungsgemäßen Heizkörpers ist dadurch gekennzeichnet, daß die Sammelrohre parallel zueinander verlaufen und die Trägerrohre und Platten in der von den Sammelrohren aufgespannten Ebene oder einer dazu parallelen Ebene liegen. Dadurch bietet der Heizkörper eine plane Wärmeabgabefläche, auf der vollflächig Verkleidungsplatten aufgebracht werden können, wodurch eine gute Wärmeübertragung von den Heizkörperplatten auf die Verkleidungsplatten erfolgen kann.

Eine herstellungsmäßig günstige Ausgestaltung der Heizkörper ist dadurch gekennzeichnet, daß die Trägerrohre und Platten aus Metall bestehen und miteinander verschweißt, insbesondere ultraschallverschweißt, sind.

Wie erwähnt, kann auf den Heizkörper eine Verkleidungsplatte aufgebracht werden, die beispielsweise als Untergrundplatte im Gebäude-lnnenausbau verwendet wird. Dies kann bereits werksseitig erfolgen, sodaß der Heizkörper als einseitig verkleidetes Produkt in den Handel kommen kann.

Eine weitere Fortbildung des erfindungsgemäßen Heizkörpers zeichnet sich dadurch aus, daß er in eine Bauplatte, insbesondere Gipsplatte, Gipsfaserplatte oder Gipskartonplatte integriert, z.B. eingegossen, ist. Die Größe dieser Bauplatte kann an die im Innenausbau üblichen Normgrößen angepaßt sein, so daß der Heizkörper auf einfache Weise gemeinsam mit solchen Bauplatten verwendet werden kann und/oder eine Kaskadierung mehrerer derartiger Heizkörper erfolgen kann.

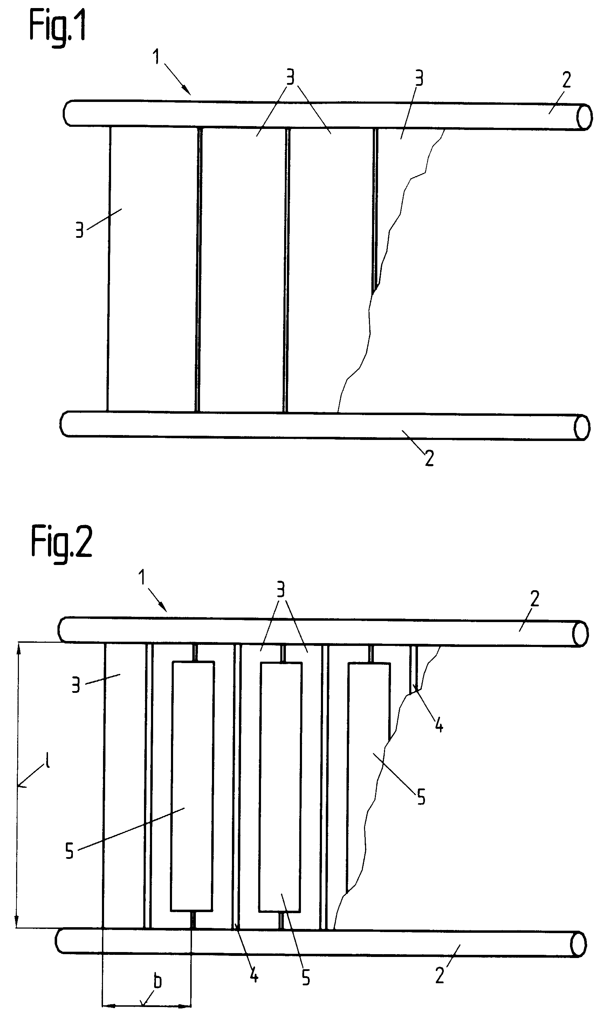

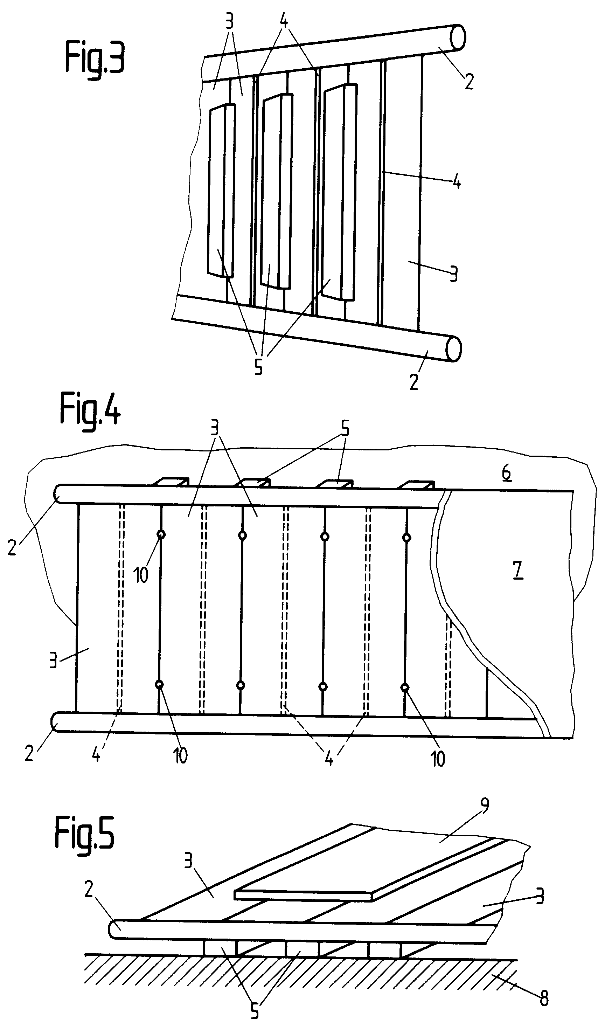

Die Erfindung wird nun unter Bezugnahme auf die Zeichnungen anhand von Ausführungsbeispielen näher beschrieben. Dabei zeigen Fig.1 einen erfindungsgemäßen Heizkörper in Vorderansicht, Fig.2 denselben Heizkörper in Hinteransicht während der Verlegung, Fig.3 eine perspektivische Darstellung des Heizkörpers von Fig.2, und Fig.4 und Fig.5 die Verlegung des erfindungsgemäßen Heizkörpers in der Wand bzw. im Boden.

Zunächst auf die Figuren 1 bis 3 Bezug nehmend, erkennt man, daß der Heizkörper 1 zwei voneinander beabstandete, parallele Sammelrohre 2 besitzt, die mit Anschlüssen zur Verbindung mit einem Heizkreislauf versehen sind. Die Sammelrohre 2 stehen miteinander durch eine Vielzahl von Trägerrohren 4 in Fluidkommunikation, die zueinander parallel und zu den Sammelrohren im rechten Winkel verlaufen. Sammelrohre 2 und Trägerrohre 4 bestehen aus Metall und sind miteinander verschweißt. Jedes Trägerrohr 4 besitzt eine streifenartige Metallplatte, insbesondere Kupferplatte, die mit dem zugehörigen Trägerrohr ultraschallverschweißt ist. Die Platten 3 liegen alle Stoß an Stoß oder mit geringem Abstand zu einander in einer Ebene und füllen die von den beiden Sammelrohren aufgespannte Fläche im wesentlichen vollflächig aus. Die Platten weisen dabei eine Länge auf, die etwa dem Normalabstand I der beiden Sammelrohre zueinander entspricht und eine Breite b, die etwa dem Abstand von zwei Trägerrohren entspricht.

In den Figuren 2 und 3 ist weiters die Verlegeweise des Heizkörpers 1 angedeutet. Dazu wird zunächst ein Lattenrost 5 am Boden oder an einer Wand montiert und an diesen Lattenrost 5 der Heizkörper 1 angelegt und von der dem Lattenrost gegenüberliegenden Seite des Heizkörpers durch seine Platten 3 hindurch mit nicht dargestellten Schrauben am Lattenrost fixiert. Da die Platten 3 keine Wärmeträgerflüssigkeit transportieren, können sie bedenkenlos durchstoßen werden. Die Verlegung des Heizkörpers kann an einer Wand hoch- oder quergestellt und am Boden in beliebiger Weise erfolgen, wobei der Lattenrost die Funktion eines Abstandshalters zwischen Wand bzw. Boden einerseits und dem Heizkörper andererseits übernimmt.

In den Figuren 4 und 5 sind Verlegebeispiele für den erfindungsgemäßen Heizkörper dargestellt. Fig.4 zeigt einen an einer Wand 6 senkrecht montierten Lattenrost 5, auf dem die Platten 3 des Heizkörpers anliegen und mit ihm mittels Schrauben 10 verschraubt sind. Die Schrauben 10 können direkt durch die Platten 3 hindurchtreten, oder durch den Spalt zwischen zwei benachbarten Platten. Wesentlich ist, daß bei dieser Verlegung die Trägerrohre 4 zwischen den jeweiligen Lattenrostelementen 5 liegen, wie strichliert dargestellt. Auf der von der Wand 6 wegweisenden Oberfläche der Platten 3 befindet sich eine Verkleidungsplatte 7, die mit den Platten 3 des Heizkörpers verschraubt ist. (In der Zeichnung ist aus Übersichtsgründen die Verkleidungsplatte 7 teilweise weggeschnitten dargestellt.) Die Verkleidungsplatte 7 kann eine Bauplatte, wie z.B. eine Gips-, Gipsfaser- oder Gipskartonplatte sein. Alternativ dazu kann der gesamte Heizkörper bereits bei der Herstellung in eine solche Bauplatte integriert werden, beispielsweise durch Eingießen. In einer weiteren alternativen Ausführungsform kann der Heizkörper unverkleidet verwendet werden.

Fig.5 zeigt einen Aufbau einer Fußbodenheizung unter Verwendung des erfindungsgemäßen Heizkörpers. Dieser Aufbau besteht aus einem Unterfußboden 8, beispielsweise einem Estrich, auf dem ein Lattenrost 5 angeordnet wurde. Auf dem Lattenrost 5 liegt ein Heizkörper 1, dessen Platten 3 eine im wesentlichen ebene Bodenfläche bilden. Lattenrost und Heizkörper sind miteinander verschraubt. Auf der durch die Platten 3 gebildten Bodenfläche ist ein Oberfußboden 9 der gewünschten Beschaffenheit verlegt. Dieser kann je nach vorgesehenem Zweck z.B. Bauplatten, Holzplatten, Teppiche umfassen.

## Patentansprüche

1. Heizkörper (1) mit zwei voneinander beabstandete Sammelrohren (2) zum Anschluß an ein Heizsystem, die durch eine Vielzahl untereinander beabstandeter Trägerrohre (4) miteinander kommunizierend verbunden sind, wobei die Trägerrohre (4) aus gut wärmeleitfähigem Material bestehen und mit Platten (3) aus gut wärmeleitfähigem Material, insbesondere Metall, vorzugsweise Kupfer, verbunden sind, und die Platten (3) die zwischen den Sammelrohren (2) aufgespannte geometrische Fläche überdecken.

2. Heizkörper nach Anspruch 1, dadurch gekennzeichnet, daß die Sammelrohre (2) parallel zueinander verlaufen und die Trägerrohre (4) und Platten (3) in der von den Sammelrohren aufgespannten Ebene oder einer dazu parallelen Ebene liegen.

3. Heizkörper nach Anspruch 1 oder 2, dadurch gekennzeichnet, daß die Trägerrohre (4) und Platten (3) aus Metall bestehen und miteinander verschweißt, insbesondere ultraschallverschweißt, sind.

4. Heizkörper nach einem der vorhergehenden Ansprüche, dadurch gekennzeichnet, daß er an einer Hauptseite eine Verkleidungsplatte (7) aufweist.

5. Heizkörper nach einem der Ansprüche 1 bis 3, dadurch gekennzeichnet, daß er in eine Bauplatte integriert ist, die vorzugsweise eine Gipsplatte, Gipsfaserplatte oder Gipskartonplatte ist.
